# EUROPÄISCHE PATENTSCHRIFT

(11) **EP 2 479 244 B1**
(45) Veröffentlichungstag und Bekanntmachung des Hinweises auf die Patenterteilung: **14.11.2018**
(21) Anmeldenummer: 11450155.4
(22) Anmeldetag: 22.12.2011
(51) Int. Cl.: C10J 3/62, C10J 3/66, C10J 3/48, C10B 57/10

(54) **VERFAHREN UND ANLAGE ZUM BERTREIBEN EINER ANLAGE ZUR ENERGIEGEWINNUNG**
METHOD AND APPARATUS FOR OPERATING AN ASSEMBLY FOR ENERGY GENERATION
PROCÉDÉ ET DISPOSITIF DE FONCTIONNEMENT D'UNE INSTALLATION POUR LA PRODUCTION D'ÉNERGIE

(30) Priorität: 03.01.2011 AT 92011
(43) Veröffentlichungstag der Anmeldung: 25.07.2012
(73) Patentinhaber: Hirr, Günter, 9360 Friesach (AT)
(72) Erfinder: Hirr, Günther, 9360 Friesach (AT)
(74) Vertreter: Beer & Partner Patentanwälte KG

(56) Entgegenhaltungen:
- WO-A1-2006/117824
- DE-A1- 19 608 093
- US-A- 4 368 103

## Beschreibung

Die Erfindung betrifft eine Anlage zur Energiegewinnung mit wenigstens einem Materialeingang für kohlenstoffhaltige Masse, insbesondere Biomasse, mit wenigstens einer thermische Energie erzeugenden Vergasungseinheit zum Überführen der kohlenstoffhaltigen Masse in brennbares Gas und mit wenigstens einer Einrichtung zum Erzeugen von elektrischer Energie aus brennbarem Gas, wobei wenigstens ein Materialausgang für Koks als energetisch aufbereitetes Zwischenprodukt aus wenigstens einer Vergasungseinheit vorgesehen ist, der in ein Zwischenlager mündet.
Weiters betrifft die Erfindung ein Verfahren zum Betreiben einer Anlage zur Energiegewinnung, bei dem kohlenstoffhaltige Masse, insbesondere Biomasse, in einem wenigstens einstufigen Vergasungsprozess unter Erzeugung von thermischer Energie in ein brennbares Gas überführt wird, wobei als Zwischenprodukt Koks entsteht, und bei dem das brennbare Gas teilweise in elektrische Energie umgewandelt wird, wobei nur ein Teil des Koks zur Energiegewinnung in Gas überführt wird und der andere Teil des Koks dem Prozess entnommen und zwischengelagert wird.

Mehr als je zuvor ist es notwendig, nicht nur fossile Brennstoffe auszubeuten, sondern alternative Energieressourcen zu finden. Da die Vorkommen von fossilen Brennstoffen schrumpfen, muss man nach anderen, regenerativen Energiequellen suchen. Aber nicht nur die Einsparung fossiler Brennstoffe sollte ein Ziel sein, sondern auch der damit einhergehende Klimaschutz in Form einer Reduzierung der CO₂-Emission, da CO₂ als Treibhausgas und als wichtigster Verursacher einer Klimaveränderung gilt. Europa hat sich das Ziel gesetzt, bis zum Jahr 2020 insgesamt 20% des Gesamtenergieverbrauchs aus erneuerbaren Quellen zu decken. Zusätzlich sollen die Treibhausgasemissionen um 20% gesenkt und insgesamt 20% weniger Energie verbraucht werden. Für Österreich wird es das Ziel bzw. die Vorgabe sein, einen Beitrag von 34% erneuerbarer Energie bis 2020 zu erreichen.

Eine der energetisch am wichtigsten einzustufenden Voraussetzung für jede Art der Energieerzeugung aus Biomasse, d.h. aus vorwiegend cellulose- und ligninhaltiger Masse, ist die Verwendung von getrocknetem Holz. Es ist dabei egal, ob das in Frage kommende Brennmaterial in einem normalen Heizkessel bzw. in einer Kraftwärmekopplung verbrannt oder, wie bei der Pyrolyse, vergast wird. Je trockener das Brennmaterial ist, umso besser brennt es; umso günstiger ist auch die Energiebilanz einer Anlage. Doch bietet die Verwertung von getrockneter forstlicher Biomasse nicht nur energetische Vorteile sondern auch eine wesentliche Verbesserung der COx-Bilanz. Es entspricht nämlich nicht der Wahrheit, dass Biomasse immer COx-neutral verbrennt; dies träfe nur bei vollkommen trockenem Brennmaterial ein. In den traditionellen Verbrennungsanlagen wird die Biomasse jedoch nur innerhalb der Zwischenlagerung einer Vortrocknung unterzogen. Längerfristige Trocknung geschieht mittels Lufttrocknung, bei der Holz über einige Jahre gelagert wird. Diese Lagerungsart beinhaltet jedoch die Gefahr, als Brutstätte für Waldschädlinge zu fungieren.

Bei herkömmlichen Anlagen zur Gewinnung von elektrischer und thermischer Energie besteht neben dem Spannungsverhältnis zwischen Trocknung und Heizwert der Biomasse der Nachteil, dass der unterschiedliche Wärmebedarf von Sommer und Winter nur ausgleichen werden kann, wenn, bei gleichzeitiger Aufrechterhaltung der Stromproduktion, die im Sommer für ein Fernwärmenetz überflüssig erzeugte Wärmeenergie technisch vernichtet wird.

Aus der WO 2008/110383 A2 ist eine Anlage bekannt, bei der mittels Vergasung der feste Rohstoff Holz nicht vollständig verbrannt, sondern thermochemisch in ein brennbares Gas übergeführt wird. Bei einer Temperatur zwischen 500 und 600 Grad Celsius und ohne Sauerstoff zerlegt sich die Biomasse in ihre festen, flüssigen und gasförmigen Bestandteile. Was anschließend noch fest und flüssig ist, wird bei geringer Luftzufuhr und rund 1.000 Grad ebenfalls vergast. Mit diesem Verfahren steht eine Anlage zur Verfügung, welche es schafft, die Entstehung des normalerweise bei der Biomassevergasung auftretenden und äußerst schwierig zu behandelnden Holzteers zu verhindern. Holz aus heimischen Wäldern wird feinstaubfrei und unter geringstem Reststoffanfall zu sauber verbrennbarem Gas überführt, das rund 75-80 Prozent der Energie des ursprünglichen Rohstoffs beinhaltet. Die Energie dieses Holzgases kann ohne Schwierigkeiten z.B. über einen Motor in Strom und Wärme umgewandelt werden.

Jedoch besteht auch bei dieser Anlage der Nachteil, dass die im Sommer bei der Stromproduktion entstehende Wärme zum großen Teil nicht für die Wärmeversorgung eines Fernwärmenetzes verwertet werden kann. Das Ergebnis ist nicht nur das nicht adäquate Größen- bzw. Auslegungsverhältnis einer Anlage im Vergleich von Sommer- zum Winterbetrieb, sondern auch die gewaltige Diskrepanz in der Energiebilanz. Auf Kosten der Stromerzeugung entsteht überflüssige Wärme.

Aus der US 4,368,103 A und der WO 2006/117824 A1 sind Verfahren und eine Anlage zur Vergasung von Kohle bzw. Hausmüll bekannt, wobei dem Prozess Koks entnommen wird.

Der Erfindung liegt die Aufgabe zu Grunde, ein Verfahren sowie eine Anlage der eingangs genannten Gattung zur Verfügung zu stellen, mit welchen die genannten Ziele erreicht und die genannten Nachteile vermieden werden können.

Gelöst wird diese Aufgabe erfindungsgemäß mit einer Vorrichtung, welche die Merkmale des Anspruches 1 aufweist.

Weiters wird diese Aufgabe erfindungsgemäß mit einem Verfahren gelöst, welches die Merkmale des Anspruches 3 aufweist.

Bevorzugte und vorteilhafte Ausführungsformen der Erfindung sind Gegenstand der Unteransprüche.

Erfindungsgemäß ist vorgesehen, dass die Vorrichtung einen Trockner für Biomasse aufweist, in welchen eine Leitung für warme Abluft aus wenigstens einer Vergasungseinheit mündet, dass sie eine Vorrichtung zum Verarbeiten des entnommenen Koks und getrockneter Biomasse zu Heizwertspeichern, insbesondere Pellets, aufweist, und dass die aus einer Vergasungseinheit entnommene Menge an Koks so steuerbar ist, dass sie jener Menge bzw. dem Heizwert entspricht, der mit der getrockneten Biomasse dem Mischungsverhältnis nach jenem im Heizwertspeicher, insbesondere Pellet, erwünschten Heizwert ergibt.

Erfindungsgemäß ist weiters vorgesehen, dass erzeugte thermische Energie zum Trocknen von Biomasse verwendet wird, dass entnommener Koks und getrocknete Biomasse zu Heizwertspeichern, insbesondere Pellets, verarbeitet werden und dass die aus dem Vergasungsprozess entnommene Menge an Koks so gesteuert wird, dass sie jener Menge bzw. dem Heizwert entspricht, der mit der getrockneten Biomasse dem Mischungsverhältnis nach jenem im Heizwertspeicher, insbesondere Pellet, erwünschten Heizwert ergibt.

In einer besonders bevorzugten Ausführungsform der Erfindung wird die kohlenstoffhaltige Masse in wenigstens zwei aufeinander folgenden Vergasungsprozessen in ein brennbares Gas überführt, wobei Koks vor bzw. bei dem letzten Vergasungsprozess entnommen wird. Insbesondere kann vorgesehen sein, dass die kohlenstoffhaltige Masse in wenigstens zwei Vergasungseinheiten in ein brennbares Gas überführt wird und dass Koks aus der letzten Vergasungseinheit entnommen wird.

Im Rahmen der Erfindung wird während Zeiträumen geringeren Wärmeverbrauchs nur der Teil an Koks zum vollständigen Vergasen im Vergasungsprozess belassen, der zur Deckung des Bedarfs an elektrischer Energie notwendig ist.

Der Vorteil, dass Koks entnommen wird, liegt darin, dass Koks ca. den doppelten Heizwert von Biomasse aufweist und fast keine flüchtigen Bestandteile mehr beinhaltet (weniger Lagerfläche; inerte Struktur). Durch die Entnahme des Koks als Energiespeicher in Zeiträumen geringeren Wärmebedarfs (z.B. Sommer) wird somit die Abgasemission in diesen Zeiträumen reduziert, da nicht mehr der gesamte Koks unter Produktion von überschüssiger Wärme und überschüssiger Abgasemission in brennbares Gas überführt wird. Zudem wird somit auch die Abgasemission in Zeiträumen höheren Wärmebedarfs (z.B. Winter) reduziert, da die Schadstoffemissionen bei der Verbrennung von Koks (aus der Sommerproduktion) auf ein Minimum reduziert sind.

Mit der Erfindung ist es demnach möglich, die bei der Stromproduktion auftretende Wärmeüberproduktion auszugleichen, indem in der warmen Jahreszeit mit derselben Anlage eine Energieform für den Winter produziert aber auch gespeichert wird. Energie des Sommers wird also in eine wesentlich höherwertigere Energie des Winterbedarfs umgewandelt, wobei zudem die Menge an (zu trocknender) Biomasse, welche im Winter zum Decken des Energiebedarfs verwendet werden müsste, reduziert wird.

Die Energiebilanz einer Anlage zur Energiegewinnung kann durch die erfindungsgemäße Entnahme von Koks deutlich verbessert werden. Eine weitere Verbesserung der Energieausnutzung besteht erfindungsgemäß darin, dass während des Vergasungsprozesses anfallende Pyrolysereststoffe, oft als Asche bezeichnet, dem Prozess entnommen wird und dass der entnommene Pyrolysereststoff, der entnommene Koks und getrocknete Biomasse zu Heizwertspeichern, insbesondere Pellets, verarbeitet werden. Somit kann Koks als energetisch aufbereitetes Zwischenprodukt unter Zugabe von weiteren Stoffen zu einem Heizwertspeicher verarbeitet werden, der in Zeiträumen höheren Wärmeverbrauchs wieder verwertet wird.

Weitere Einzelheiten, Merkmale und Vorteile der Erfindung ergeben sich aus der nachstehenden Beschreibung unter Bezugnahme auf die angeschlossenen Zeichnungen, in welchen eine bevorzugte Ausführungsform der Erfindung dargestellt ist.

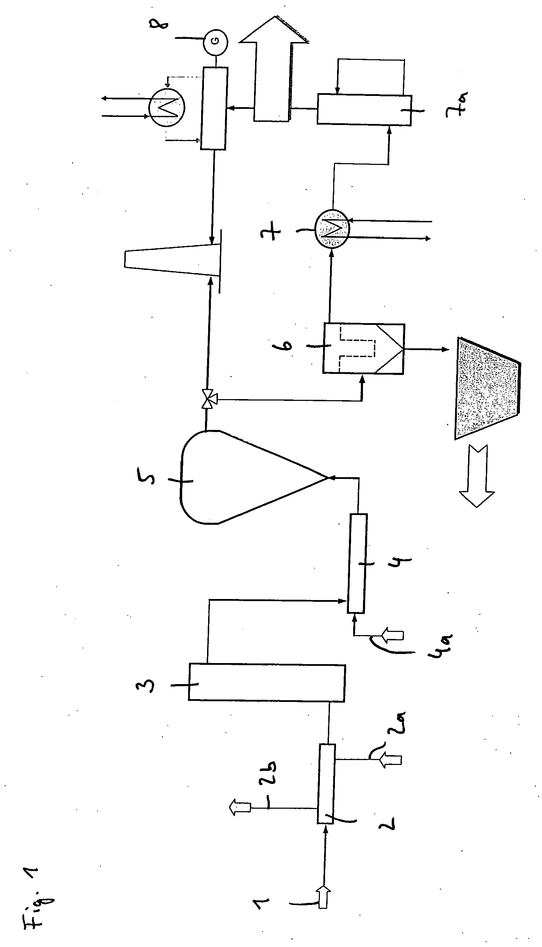

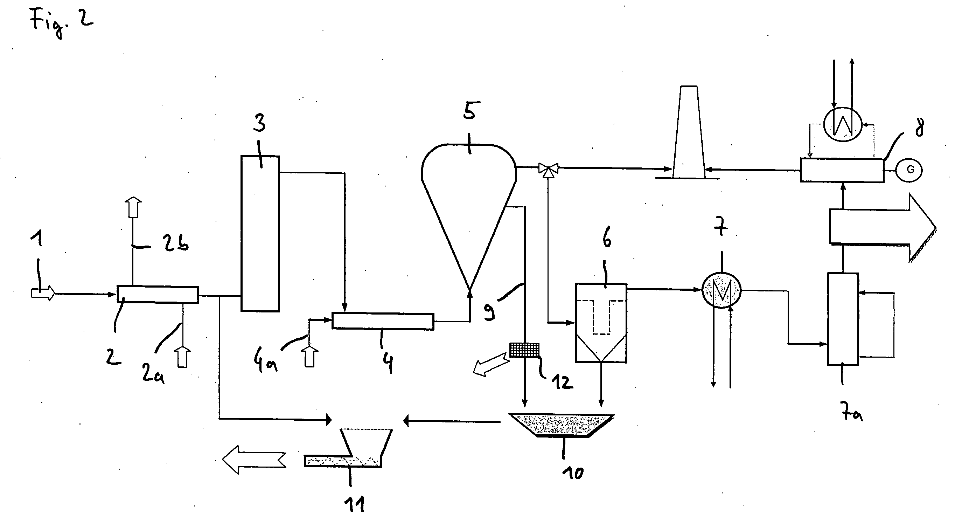

Es zeigt: Fig. 1 in schematischer Darstellung eine bekannte Anlage zur Gewinnung von thermischer und elektrischer Energie aus Biomasse und Fig. 2 in schematischer Darstellung eine erfindungsgemäße Anlage zur Gewinnung von thermischer und elektrischer Energie aus Biomasse.

Die in Fig. 1 dargestellte Anlage zur Energiegewinnung weist eingangs einen Materialeingang 1 für Biomasse, beispielsweise Holz, auf, über den die Biomasse, welche noch einen für die Pyrolyse ungünstig hohen Wassergehalt aufweist, einer Trockeneinrichtung 2 mit einer Luftzuleitung 2a und einer Luftableitung 2b zugeführt wird. Die Biomasse wird nach dem Reduzieren des Wassergehalts in der Trockeneinrichtung 2 in eine erste Pyrolyseeinheit 3 eingebracht.

Die erste Vergasungseinheit 3 ist im gezeigten Ausführungsbeispiel ein Pyrolysereaktor, in welchem die Pyrolyse bei Temperaturen von ca. 200 - 700°C, insbesondere bei 500 - 600°C, erfolgt. Ziel der ersten Vergasungseinheit 3 ist ein teilweises Überführen der Biomasse in einen gasförmigen Zustand. Um eine Verbrennung der Biomasse zu verhindern erfolgt die Vergasung vorzugsweise im Wesentlichen unter Ausschluss von Luft bzw. Sauerstoff. Als Produkte der ersten Vergasungseinheit 3 entstehen feste, flüssige und gasförmige Bestandteile. Die flüssigen Bestandteile sind unter anderem flüchtige, ölige Bestandteile. Die gasförmigen Bestandteile sind insbesondere Wasserdampf, CO, CO₂, H₂ und CH₄. Die festen Bestandteile sind insbesondere Koks mit einem Heizwert, der über dem Heizwert der eingangs eingebrachten Biomasse liegt.

Nach der ersten Vergasungseinheit 3 gelangen die festen, flüssigen und gasförmigen Bestandteile in eine zweite Vergasungseinheit 4. Die zweite Vergasungseinheit 4 ist im gezeigten Ausführungsbeispiel ein Oxidationsreaktor. Im Oxidationsreaktor werden unter Vorhandensein von Luft bzw. Sauerstoff durch die Luftzuleitung 4a die bislang noch festen und flüssigen Bestandteile wiederum teilweise in einen gasförmigen Zustand überführt. Die Vergasung findet bei Temperaturen von ca. 700 - 1500°C, insbesondere bei 800 - 1000°C, statt, wobei sich bislang gebildeter Holzteer zersetzt.

Nach der zweiten Vergasungseinheit 4 gelangen die Bestandteile in eine dritte Vergasungseinheit 5. Die dritte Vergasungseinheit 5 ist im gezeigten Ausführungsbeispiel ein Reduktionsreaktor, in welchem sämtliche noch nicht gasförmigen Bestandteile in den gasförmigen Zustand umgewandelt werden.

Nach vollständiger Umwandlung der ursprünglich festen und flüssigen Bestandteile der Biomasse in brennbares Gas wird das Gas in einem Filter 6 gefiltert, in einem Gaskühler 7 gekühlt und in einem Gaswäscher 7a gewaschen. Mit dem Gas werden dann Strom erzeugende Einrichtungen 8, z.B. Gasmotoren, betrieben.

Biomassevergasungsanlagen produzieren vorwiegend ein Produktgas, welches zumeist direkt energetisch verwertet (z.B. Gasmotor) oder aber über einen weiteren Prozessschritt zu Biomethan umgewandelt werden kann. Speziell die Verwertung über Gasmotoren produziert wertvollen Ökostrom ist aber nur bedingt teillastfähig, weshalb die produzierten Wärmemengen im Sommer vielerorts nur zum Teil genutzt werden können. Das brennbare Gas ist im Gegensatz zu bislang aus der Pyrolyse von Biomasse erzeugten Gas teerfrei und derart rein, dass es auch für die Verwendung als Prozesswärme verwendbar ist.

Die in Fig. 2 dargestellte, erfindungsgemäße Anlage unterscheidet sich von der in Fig. 1 dargestellten, bekannten Anlage dadurch, dass aus der dritten Vergasungseinheit 5 (Reduktionsreaktor, insbesondere Schwebebettreaktor) ein Materialausgang 9 für Koks führt, der in einen Zwischenspeicher 10 mündet.

Im Rahmen der Erfindung kann der Koks auch der ersten Vergasungseinheit 3 und/oder der zweiten Vergasungseinheit 4 entnommen werden. Es ist jedoch bevorzugt, den Koks aus der dritten Vergasungseinheit 5 zu entnehmen, da der Koks dann den besten Heizwert aufweist und besonders rein und trocken ist.

Gemäß der Erfindung wird (im Sommer) von dem bei der Vergasung der Biomasse entstandenen Koks (Holzkohle) nur jener Teil im Reduktionsreaktor belassen, der für den gewünschten Endvergasungsprozess zur Stromerzeugung beibehalten werden muss. Die dabei entnommene Holzkohle ist fast geruchlos und ist problemlos zu lagern. Es besteht auch die Möglichkeit, dem Prozess mehr Holzkohle entsprechend einer Verwertung in weiteren Heizwerken zu entnehmen. Nach Bedarf, vorwiegend im Winter, wird der Koks (die Holzkohle) gemeinsam mit einem Anteil nicht getrockneter Biomasse (Feuchtigkeits- und Energielieferant) wieder in den Prozess eingebracht. Zum Unterschied zu normaler Biomasse hat Holzkohle einen wesentlich höheren Heizwert (8.500 bis 9.000 kWh/t und mehr oder weniger 0,0% Feuchtigkeit).

Mit dieser Technologie wird also der Effekt erreicht, dass im Sommer nur ein kleiner Teil der eingesetzten Biomasse für die unmittelbare Strom- und Wärmeerzeugung verwendet wird, jedoch der größere Teil als Holzkohle für die Energienutzung im Winter oder jederzeit auch bei höherem Energiebedarf in derselben Anlage - oder nicht nur dort - eingesetzt werden kann. Der nach der Stromproduktion zwangsläufig anfallende Wärmeüberschuss im Sommer wird für die Trocknung der Biomasse auf ca. 15% eingesetzt; diesem System geht nur sehr gering Energie verloren, noch wird Energie verschwendet oder künstlich vernichtet.

Die Abänderung dieses Betriebsschemas in Richtung zu einer erweiterten Teillastfähigkeit vom Vergasungssystem besteht in der Möglichkeit, ein auf Gasbasis betriebenes Blockheizkraftwerk nur im Wärmegrundlastbetrieb, z.B. eines Fernwärmenetzes (inkl. eines betriebseigenen Wärmebedarfs), zu betreiben und während der Sommermonate zusätzlich Vergaserkoks bzw. Koks auszuschleusen und zwischen zu lagern.

Im Falle eines erhöhten Wärmebedarfs (z.B. Wintermonate) könnten diese gelagerten Mengen an Koks dann über einen weiteren thermischen Prozess energetisch genutzt (z.B. als Zuschlagsstoff zu Biomasse in Kesselanlagen), oder aber in das Vergasungssystem rückgeführt werden, um den Gasoutput punktuell und bedarfsorientiert zu erhöhen. Dieses Gas kann dann wiederum z.B. in einer Gaskesselanlage sowie anderen energetischen Gaseinsatzbereichen genutzt bzw. zum Einsatz gelangen.

Die Vergasung von Biomasse findet bei einem bestimmten Luftverhältnis λ statt, welches die Relation zwischen eingesetztem Sauerstoff und dem zur vollständigen Verbrennung notwendigen Sauerstoff beschreibt. Das Luftverhältnis λ ist bei der Vergasung kleiner 1, d.h. es findet eine unterstöchiometrische Verbrennung statt. Dabei gilt: je weniger Sauerstoff (Luft) eingesetzt werden muss, desto kleiner ist das Luftverhältnis λ und desto mehr <koks bleibt über. Die Ausschleusung des koks aus dem laufendem Prozess wird im Rahmen der Erfindung dadurch möglich, dass das gewählte Luftverhältnis λ niedriger als bei einer möglichst vollständigen Vergasung gewählt wird. Übliche λ liegen bei ca. 0,3 bis 0,4. Für die erfindungsgemäße Koksausschleusung kann ein Luftverhältnis λ von 0,2 gewählt werden, wobei ca. 30 bis 50% Koks ausgeschleust werden kann. Ein Betrieb unter dem Luftverhältnis λ von 0,2 ist schwer möglich. Dabei ist zu berücksichtigen, dass die Prozesstemperaturen entsprechend (nach unten hin) angepasst werden müssen.

Wie in Fig. 2 weiters ersichtlich ist, weist die Anlage zur Energiegewinnung eine Vorrichtung 11 zum Verarbeiten des entnommenen Koks zu Pellets auf. Zwischen einer Vergasungseinheit 3, 4, 5 und der Vorrichtung 11 kann ein Sieb 12 angeordnet sein, um den Koks nach der Entnahme aus einem Reaktor zu sieben. Somit können größere Stücke des Koks entfernt und einer gesonderten Verwertung (z.B. Grillkohle) zugeführt werden. Der gegebenenfalls gesiebte Koks sowie aus einer Vergasungseinheit 3, 4, 5 entnommener Pyrolysereststoff, oft als Asche bezeichnet, können zusammen mit getrockneter Biomasse zu Pellets verpresst werden.

Im Rahmen der Erfindung ist die Luftzuleitung 2a des Trockners 2 eine Leitung 2a für warme Abluft aus wenigstens einer Einrichtung zum Erzeugen von thermischer Energie. Die dermaßen getrocknete Biomasse kann dann entweder dem Vergasungsprozess zugeführt oder in die Pelletpresse 11 eingebracht werden.

Über die erfindungsgemäße Produktion von Pellets mit einem höheren Heizwert als jenem herkömmlich produzierter Pellets, wird eine besonders hohe Energieausnutzung einer Anlage zur Energiegewinnung erreicht. Herkömmlich produzierte und am Markt erhältlich Pellets haben einen tatsächlichen Heizwert von ca. 4.400 kWh je Tonne. Sie bestehen neben einem sehr geringen Anteil an Bindemittel aus getrockneter Biomasse. Die Herstellung ist bislang nur mit sehr hohem Energieaufwand für das Trocknen und Pressen verbunden.

Erfindungsgemäß wird erreicht, dass die Anlage zur Energiegewinnung praktisch ohne Wärmeverluste stromgesteuert gefahren werden kann. Die gesamt anfallende Wärmeenergie wird zum Teil als Energie- bzw. Heizwertspeicher für einen späteren Bedarf gespeichert und zum Teil für die Trocknung von Biomasse verwendet. Damit wird ein Überschuss an getrockneter Biomasse erreicht, die entweder günstiger vergast werden kann oder in Zeiträumen höheren Wärmebedarfs nicht mehr getrocknet werden müsste oder zu einem hochwertigen Pellet verarbeitet werden kann. Die aus dem Vergasungsprozess entnommene Menge an Koks wird so gesteuert, dass sie jener Menge bzw. dem Heizwert entspricht, der mit der getrockneten Biomasse dem Mischungsverhältnis nach jenem im Pellet erwünschten Heizwert ergibt.

Der untere Heizwert von Koks wird mit 8.700 kWh je Tonnen angegeben. Die Beimischung des Pyrolysereststoffs, insbesondere Asche, erhöht die energetische Effizienz der Anlage. Der Pyrolysereststoff ist zudem bei der Verbrennung des Pellets vollkommen umweltneutral. Er besteht nur mehr aus reinem Kohlenstoff und einem sehr geringen Anteil an Holzasche, hat jedoch einen Heizwert von ca. 8.000 kWh je Tonne. Der Anteil von Pyrolyseabfall ist zwischen 4 und 5 % des Heizwertes der für die Gaserzeugung notwendigen Energiemenge an Biomasse und daher insgesamt sehr erheblich.

Mit einem Mischungsverhältnis von ca. 58 % Koks samt Pyrolyseabfall und dem Rest mit getrockneter Biomasse erreicht man einen Pelletheizwert von ca, 5.300 kWh je Tonne, was gegenüber den herkömmlichen Pellets eine Heizwerterhöhung um mehr als 20 % entspricht. Die Folge ist, dass eine Pelletheizung für den gleichen Wärmebedarf um ca. 20 % weniger Brennstoff benötigt.

## Patentansprüche

1. Anlage zur Energiegewinnung mit wenigstens einem Materialeingang (1) für kohlenstoffhaltige Masse, insbesondere Biomasse, mit wenigstens einer thermische Energie erzeugenden Vergasungseinheit (3, 4, 5) zum Überführen der kohlenstoffhaltigen Masse in brennbares Gas und mit wenigstens einer Einrichtung (8) zum Erzeugen von elektrischer Energie aus brennbarem Gas, wobei wenigstens ein Materialausgang (9) für Koks als energetisch aufbereitetes Zwischenprodukt aus wenigstens einer Vergasungseinheit (3, 4, 5) vorgesehen ist, der in ein Zwischenlager (10) mündet, **dadurch gekennzeichnet, dass** sie einen Trockner (2) für Biomasse aufweist, in welchen eine Leitung (2a) für warme Abluft aus wenigstens einer Vergasungseinheit (3, 4, 5) mündet, dass sie eine Vorrichtung (11) zum Verarbeiten des entnommenen Koks und getrockneter Biomasse zu Heizwertspeichern, insbesondere Pellets, aufweist, und dass die aus einer Vergasungseinheit (3, 4, 5) entnommene Menge an Koks so steuerbar ist, dass sie jener Menge bzw. dem Heizwert entspricht, der mit der getrockneten Biomasse dem Mischungsverhältnis nach jenem im Heizwertspeicher, insbesondere Pellet, erwünschten Heizwert ergibt.

2. Anlage nach Anspruch 1, **dadurch gekennzeichnet, dass** wenigstens zwei Vergasungseinheiten (3, 4, 5) vorgesehen sind und dass der Materialausgang (9) im Bereich der letzten Vergasungseinheit (5), insbesondere ausgehend von der letzten Vergasungseinheit (5), angeordnet ist.

3. Verfahren zum Betreiben einer Anlage zur Energiegewinnung, bei dem kohlenstoffhaltige Masse, insbesondere Biomasse, in einem wenigstens einstufigen Vergasungsprozess in wenigstens einer Vergasungseinheit (3, 4, 5) unter Erzeugung von thermischer Energie in ein brennbares Gas überführt wird, wobei als Zwischenprodukt Koks entsteht, und bei dem das brennbare Gas teilweise in elektrische Energie umgewandelt wird, wobei nur ein Teil des Koks zur Energiegewinnung in Gas überführt wird und der andere Teil des Koks dem Prozess entnommen und zwischengelagert wird, **dadurch gekennzeichnet, dass** erzeugte thermische Energie zum Trocknen von Biomasse verwendet wird, dass entnommener Koks und getrocknete Biomasse zu Heizwertspeichern, insbesondere Pellets, verarbeitet werden und dass die aus einer Vergasungseinheit (3, 4, 5) entnommene Menge an Koks so gesteuert wird, dass sie jener Menge bzw. dem Heizwert entspricht, der mit der getrockneten Biomasse dem Mischungsverhältnis nach jenem im Heizwertspeicher, insbesondere Pellet, erwünschten Heizwert ergibt.

4. Verfahren nach Anspruch 3, **dadurch gekennzeichnet, dass** kohlenstoffhaltige Masse in wenigstens zwei Vergasungseinheiten (3, 4, 5) in ein brennbares Gas überführt wird und dass Koks aus der letzten Vergasungseinheit (5) entnommen wird.

5. Verfahren nach Anspruch 3, **dadurch gekennzeichnet, dass** während Zeiträumen geringeren Wärmeverbrauchs nur der Teil an Koks zum vollständigen Vergasen im Prozess belassen wird, der zur Deckung des Bedarfs an elektrischer Energie notwendig ist.

6. Verfahren nach einem der Ansprüche 3 bis 5, **dadurch gekennzeichnet, dass** wenigstens ein Vergasungsprozess bei einem Luftverhältnis λ von ca. 0,2 durchgeführt wird.

7. Verfahren nach einem der Ansprüche 3 bis 6, **dadurch gekennzeichnet, dass** während des Vergasungsprozesses anfallender Pyrolysereststoff, insbesondere Asche, dem Prozess entnommen wird und dass der entnommene Pyrolysereststoff, der entnommene Koks und getrocknete Biomasse zu Heizwertspeichern, insbesondere Pellets, verarbeitet werden.

## Claims

1. Apparatus for generating energy with at least one material inlet (1) for carbonaceous mass, in particular biomass, having at least one thermal energy-producing gasification unit (3, 4, 5) for converting the carbonaceous mass into combustible gas and having at least one device (8) for generating electrical energy from combustible gas, wherein at least one material outlet (9) for coke as an intermediate product prepared for energy from at least one gasification unit (3, 4, 5) is provided, which opens into an intermediate storage unit (10), **characterized in that** it comprises a biomass dryer (2) into which a line (2a) for hot exhaust air from at least one gasification unit (3, 4, 5) opens, that it comprises a device (11) for processing the extracted coke and dried biomass to heat value stores, in particular pellets, and that the quantity of coke removed from a gasification unit (3, 4, 5) is controllable in such a way that it corresponds to that quantity or the heat value which with the dried biomass, according to the mixing ratio, results in the heat value desired in the heat value store, in particular pellet.

2. Apparatus according to claim 1, **characterized in that** at least two gasification units (3, 4, 5) are provided and that the material outlet (9) is arranged in the region of the last gasification unit (5), in particular starting from the last gasification unit (5).

3. Method for operating an apparatus for generating energy, in which carbon-containing mass, in particular biomass, is converted into a combustible gas in at least one gasification unit (3, 4, 5) in an at least one-stage gasification process by generating thermal energy, wherein coke is produced as the intermediate product, and in which the combustible gas is partially converted into electrical energy, wherein only part of the coke is converted into gas for energy production and the other part of the coke is removed from the process and temporarily stored, **characterized in that** generated thermal energy is used for drying biomass, that removed coke and dried biomass are processed to heat value stores, in particular pellets, and that the quantity of coke removed from a gasification unit (3, 4, 5) is controlled in such a way that it corresponds to that quantity or the heat value which with the dried biomass, according to the mixing ratio, results in the heat value desired in the heat value store, in particular pellet.

4. Method according to claim 3, **characterized in that** carbonaceous mass is converted into a combustible gas in at least two gasification units (3, 4, 5) and that coke is removed from the last gasification unit (5).

5. Method according to claim 3, **characterized in that** during periods of lower heat consumption only the part of coke is left in the process for complete gasification which is necessary to cover the demand for electrical energy.

6. Method according to one of the claims 3 to 5, **characterized in that** at least one gasification process is carried out at an air ratio λ of about 0.2.

7. Method according to one of the claims 3 to 6, **characterized in that** pyrolysis residue, in particular ash, obtained during the gasification process, is removed from the process and that the removed pyrolysis residue, the removed coke and dried biomass are processed to heat value stores, in particular pellets.

## Revendications

1. Installation de production d'énergie comportant au moins une entrée de matière (1) pour une masse carbonée, en particulier une biomasse, au moins une unité de gazéification (3, 4, 5) produisant de l'énergie thermique pour convertir la masse carbonée en gaz combustible et au moins un moyen (8) pour produire de l'énergie électrique à partir de gaz combustible, au moins une sortie de matière (9) étant prévue pour du coke comme produit intermédiaire traité énergétiquement provenant d'au moins une unité de gazéification (3, 4, 5), qui débouche dans un stockage intermédiaire (10), **caractérisée en ce qu'**elle présente un séchoir (2) de biomasse, dans lequel débouche une conduite (2a) pour l'air d'échappement chaud d'au moins une unité de gazéification (3, 4, 5), qu'elle présente un dispositif (11) pour transformer le coke prélevé et la biomasse séchée en réservoirs de pouvoir calorifique, en particulier en granulés, et que la quantité de coke prélevée d'une unité de gazéification (3, 4, 5) peut être commandée de telle sorte qu'elle corresponde à la quantité ou au pouvoir calorifique qui produit avec la biomasse séchée, en fonction du rapport de mélange, le pouvoir calorifique désiré dans le réservoir de pouvoir calorifique, en particulier le granulé.

2. Installation selon la revendication 1, **caractérisée en ce qu'**au moins deux unités de gazéification (3, 4, 5) sont prévues et que la sortie de matière (9) est disposée dans la zone de la dernière unité de gazéification (5), en particulier à partir de la dernière unité de gazéification (5) .

3. Procédé de fonctionnement d'une installation de production d'énergie, dans lequel une masse carbonée, en particulier une biomasse, est convertie en un gaz combustible avec production d'énergie thermique dans au moins une unité de gazéification (3, 4, 5) dans un processus de gazéification à au moins une étape, du coke étant formé comme produit intermédiaire, et dans lequel le gaz combustible est partiellement converti en énergie électrique, seule une partie du coke étant convertie en gaz pour la production d'énergie et l'autre partie du coke étant prélevée du processus et mise en stockage intermédiaire, **caractérisé en ce que** l'énergie thermique produite est utilisée pour sécher de la biomasse, que le coke prélevé et la biomasse séchée sont transformés en réservoirs de pouvoir calorifique, en particulier en granulés, et que la quantité de coke prélevée d'une unité de gazéification (3, 4, 5) est commandée de telle sorte qu'elle corresponde à la quantité ou au pouvoir calorifique qui produit avec la biomasse séchée, en fonction du rapport de mélange, le pouvoir calorifique désiré dans le réservoir de pouvoir calorifique, en particulier le granulé.

4. Procédé selon la revendication 3, **caractérisé en ce que** la masse carbonée est convertie en un gaz combustible dans au moins deux unités de gazéification (3, 4, 5) et que le coke est prélevé de la dernière unité de gazéification (5).

5. Procédé selon la revendication 3, **caractérisé en ce que**, pendant les périodes de faible consommation de chaleur, seule la partie de coke destinée à la gazéification complète qui est nécessaire pour couvrir le besoin en énergie électrique est laissée dans le procédé.

6. Procédé selon l'une des revendications 3 à 5, **caractérisé en ce qu'**au moins un processus de gazéification est effectué avec un rapport d'air λ d'environ 0,2.

7. Procédé selon l'une des revendications 3 à 6, **caractérisé en ce que** le résidu de pyrolyse, en particulier les cendres, produit pendant le processus de gazéification, est prélevé du processus et que le résidu de pyrolyse prélevé, le coke prélevé et la biomasse séchée sont transformés en réservoirs de pouvoir calorifique, en particulier en granulés.
